# EUROPEAN PATENT SPECIFICATION

(11) **EP 3 282 669 B1**
(45) Date of publication and mention of the grant of the patent: **01.01.2020**
(21) Application number: 17185545.5
(22) Date of filing: 09.08.2017
(51) Int. Cl.: H04L 29/06

(54) **PRIVATE COMMUNICATIONS IN VIRTUAL MEETINGS**
PRIVATE KOMMUNIKATIONEN IN VIRTUELLEN MEETINGS
COMMUNICATIONS PRIVÉES DANS DES RÉUNIONS VIRTUELLES

(30) Priority: 10.08.2016 GB 201613756
(43) Date of publication of application: 14.02.2018
(73) Proprietor: Dolby Laboratories Licensing Corporation, San Francisco, CA 94103 (US)
(72) Inventor: KATEKAR, Rowan James, Sydney, McMahons Point NSW 2060 (AU); DICKINS, Glenn N., McMahons Point, NSW 2060 (AU)
(74) Representative: Dolby International AB Patent Group Europe

(56) References cited:
- WO-A1-2008/036128
- US-A1- 2006 164 507
- US-A1- 2012 128 146
- US-A1- 2014 313 281

## Description

### Technical Field

The present document relates generally to virtual meetings, and more specifically to enabling private communications within virtual meetings.

### Background

Modern virtual-meeting systems, for example those based on Voice over Internet Protocol (VoIP) technologies, tend to allow each participant in a virtual meeting to hear every other non-muted participant in the virtual meeting. That is, when one of the participants speaks (and is not "on mute"), all of the other participants hear what he or she is saying. The other participants may also see him or her saying it, if the virtual meeting is a video-enabled virtual meeting.

United States patent number 7,127,487 B1 discloses what is referred to therein as a "sidebar feature" for a virtual-meeting system. The sidebar feature is said to be usable to allow two or more parties within an ongoing virtual meeting to create a separate media path. In the separate media path, the respective audio streams of the two or more parties are available only to themselves, and not to the rest of the virtual-meeting participants. In this situation, the audio stream of the ongoing conference may be still audible to the two or more parties to the sidebar. Thus, the sidebar feature may be used for e.g. inter-party comments or explanations during the virtual meeting so as not to disturb the rest of the conference parties.

The search report issued in connection with the present document cites US 2006/164507 A1, which concerns the handling of one or more sub-conferences running in parallel to a main videoconference. In exemplary embodiment, a multipoint control unit (MCU) that controls one or more videoconferences may be requested by a conferee of a videoconference (a main videoconference) to establish a sub-conference according to a requester mode of operation.The search report issued in connection with the present document also cites WO 2008/036128 A1, which concerns an automatic conference initiator system. The system may include an automatic conference initiator program that initiates a conference when conferees are determined available based upon presence information.

The search report issued in connection with the present document also cites US 2014/313281 A1, which concerns dynamic allocation of encoders in a multi-party video conference of a number of endpoints. The video conference endpoints are adapted to encode and transmit a media stream comprising the steps of creating a new encoder at a request for a new pad, determining whether a maximum number of encoders is reached, if the maximum number of encoders is not reached, then linking the new pad to the new encoder, if the maximum number of encoders is reached, then linking all existing pads to the new encoder, and releasing all unused encoders.

### Brief Description of Drawings

Example embodiments will be described below with reference to the accompanying drawings, in which:
*Fig. 1* shows a virtual-meeting system in accordance with an embodiment of the present disclosure;
*Fig. 2* is a block diagram of an apparatus suitable for implementing components of the virtual-meeting system shown in Fig. 1;
*Fig. 3A* shows an apparatus configured to act as a virtual-meeting server in the virtual-meeting system shown in Fig. 1;
*Fig. 3B* is a flow diagram which shows some main steps of a method performed by the apparatus shown in Fig. 3A;
*Fig. 4* is a flow diagram which shows some steps of a method performed by the apparatus shown in Fig. *3A* whereby it can initiate a private communication within a virtual-meeting hosted by the virtual-meeting server;
*Fig. 5A* shows a pseudocode algorithm for determining whether to initiate a private communication, elaborating on step S410 shown in Fig. 4; and
*Figs. 5B* shows a pseudocode algorithm for populating and sorting a list of suggested participants for the private communication, elaborating on step S415 shown in Fig. 4;
*Fig. 6A-6C* show respective two-dimensional audio scenes of a virtual meeting created by the apparatus shown in Fig. 3A;
*Fig. 7A* shows an apparatus configured to act as a virtual-meeting endpoint in the virtual-meeting system shown in Fig. 1; and
*Fig. 7B* is a flow diagram which shows some main steps of a method performed by the apparatus shown in Fig. 7A.

All the Figures are schematic and generally show only parts which are necessary in order to elucidate the present disclosure, whereas other parts may be omitted or merely suggested. Unless otherwise indicated, like reference numerals refer to like parts in different Figures.

### Description of Example Embodiments

The invention is defined in independent apparatus claim 1, independent method claim 8 and in claim 15 related to a non-transitory, computer readable storage medium.

### A. Overview

In broad overview, described herein are systems and methods for enabling virtual meetings in which a subset of virtual-meeting participants can hold a private communication with one another. It has been recognised that it would be an advantage if certain ones of the virtual-meeting participants could be informed automatically about the possibility of holding a private communication, and perhaps even be given suggestions with respect to other virtual-meeting participants with whom the private communication may be held. Further, it has been recognised that it would be an advantage if a virtual-meeting participant who is party to a private communication is allocated a different location, compared with the location of a virtual-meeting participant who is not party to the private communication, within a two- or three-dimensional audio scene of the virtual meeting; this would allow the listener to take advantage of the "cocktail party effect" to distinguish between a private communication and the rest of the virtual meeting. Further, it has been recognised that modern head-tracking and/or other gesture-control technology can be used conveniently to enable a participant in a virtual meeting to indicate when a private communication is desired, and perhaps even with whom the private communication is desired. These and other advantages will be appreciated from the following description of example embodiments.

### B. Example Embodiments

### I. Virtual Meeting System

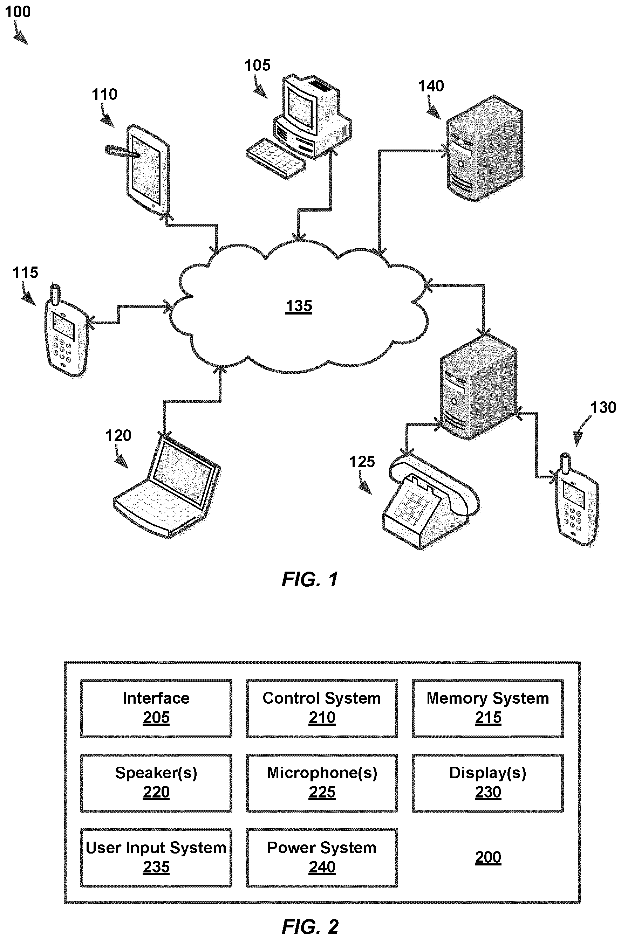

As shown in FIG. 1, a virtual-meeting system 100 according to the present embodiment comprises a plurality of virtual-meeting endpoints 105, 110, 115, 120, 125, 130 connected to each other via a network 135. The virtual-meeting system 100 further comprises a virtual-meeting server 140 connected to the virtual-meeting endpoints 105, 110, 115, 120, 125, 130 via the network 135.

The plurality of virtual-meeting endpoints 105, 110, 115, 120, 125, 130 comprises special-purpose computing devices 105, 110, 115, 120 configured to implement techniques described herein, as well as, optionally, a conventional telephone 125 and a conventional mobile telephone 130. Example virtual-meeting endpoints based on special-purpose computing devices include desktop personal computers, laptop personal computers, tablet computers, smart phones, conference phones and the like. Other suitable virtual-meeting endpoints, which fall within the scope of the accompanying claims, will be readily appreciated by those skilled in the art.

The network 135 is an Internet Protocol (IP) based network, typically comprising the Internet. Thus communications between the virtual-meeting endpoints 105, 110, 115, 120, 125, 130 comprise IP based communications, using VoIP technologies. Telephone endpoints such as the conventional telephone 125 and the conventional mobile telephone 130 may connect to the network 135 via conventional connections, such as a plain old telephone service (POTS) connection, an Integrated Services Digital Network (ISDN) connection, a cellular network collection, or the like, in a conventional manner (well known in VoIP communications).

In the virtual-meeting system 100, the virtual-meeting endpoints 105, 110, 115, 120 comprise respective virtual-meeting applications whereby they can participate in virtual meetings hosted by the virtual-meeting server 140.

In various practical implementations, the virtual-meeting application may be available as, for example, an application suitable for desktop operating systems, an application suitable for mobile operating systems, a web browser plug-in or a native library. Typically, it manages applicable network protocols in order to be able to communicate with the virtual-meeting server 140, as well as managing any audio and/or video hardware integrated into or connected to the virtual-meeting endpoint in order to render audio and/or video data received in connection with a virtual meeting. The virtual-meeting application comprises a re-join module. The re-join module enables the virtual-meeting application to re-join a virtual meeting hosted by the virtual-meeting server 140.

The virtual-meeting server 140 comprises a virtual-meeting manager which is configured to cooperate with the virtual-meeting applications of the virtual-meeting endpoints 105, 110, 115, 120.

By way of broad overview, the virtual-meeting server 140 (specifically, in the present embodiment, the virtual-meeting manager) is configured to receive respective uplink data streams from the telephone endpoints which are joined to a current virtual meeting, and to generate therefrom a respective downlink data stream for each of said telephone endpoints. Thus, typically, each telephone endpoint's downlink data stream includes audio data from the respective uplink data streams of every other telephone endpoint (but not from its own uplink stream). Accordingly, a participant in a virtual meeting can hear, when his own downlink data stream is rendered, the respective voices of all other participants (but not his own voice).

More specifically, in some practical implementations, the virtual-meeting manager may be responsible for providing a northbound interface to a service provider application server, and may implement Media Server Mark-up Language (MSML) / Session Initiation Protocol (SIP) protocols and manage the life-cycle of its virtual meetings. It may also be responsible for the "mechanics" of controlling virtual meetings in real time, e.g. controlling the joining and leaving of participants, the respective spatial locations of participants if the virtual meeting is to be spatially rendered, and the like.

### II. Example Implementation Architecture

In various embodiments, the techniques described herein are implemented by one or more apparatuses, such as one or more special-purpose computing devices. In at least one embodiment, one or more such special-purpose computing devices may be connected together and/or to other computing devices.

Fig. 2 is a block diagram that shows examples of components of such a special-purpose computing device 200. In this example, the computing device 200 includes an interface system 205. The interface system 205 may include a network interface, such as a wireless network interface. Alternatively, or additionally, the interface system 205 may include a universal serial bus (USB) interface or another such interface.

The device 200 includes a control system 210. The control system 210 may include a processor, such as a general purpose single- or multi-chip processor. The control system 210 may include a digital signal processor (DSP), an application specific integrated circuit (ASIC), a field programmable gate array (FPGA) or other programmable logic device, discrete gate or transistor logic, or discrete hardware components, or combinations thereof. The control system 210 may be configured to control the other components of the device 200. Although no interfaces between the components of the device 200 are shown in Figure 2, the control system 210 may be configured with interfaces for communication with the other components. The other components may or may not be configured for communication with one another, as appropriate.

The control system 210 may be configured to perform data processing functionality, including but not limited to the techniques described herein. In some such implementations, the control system 210 may be configured to operate (at least in part) according to software, such as a computer program, stored one or more non-transitory media. The non-transitory media may include memory associated with the control system 210, such as random access memory (RAM) and/or read-only memory (ROM). The non-transitory media may include memory of a memory system 215. The memory system 215 may include one or more suitable types of non-transitory storage media, such as flash memory, a hard drive, etc.

The display system 230 may include one or more suitable types of display, depending on the manifestation of the computing device 200. For example, the display system 230 may include a liquid crystal display, a plasma display, a bistable display, etc.

The user input system 235 may include one or more devices configured to accept input from a user. In some implementations, the user input system 235 may include a touch screen that overlays a display of the display system 230. The user input system 235 may include a mouse, a track ball, a gesture detection system, a joystick, one or more GUIs and/or menus presented on the display system 230, buttons, a keyboard, switches, etc. In some implementations, the user input system 235 may include the microphone 225: a user may provide voice commands for the device 200 via the microphone 225. The control system may be configured for speech recognition and for controlling at least some operations of the device 200 according to such voice commands.

The power system 240 may include one or more suitable energy storage devices, such as a nickel-cadmium battery or a lithium-ion battery. The power system 240 may be configured to receive power from an electrical outlet.

### III. Virtual Meeting Server

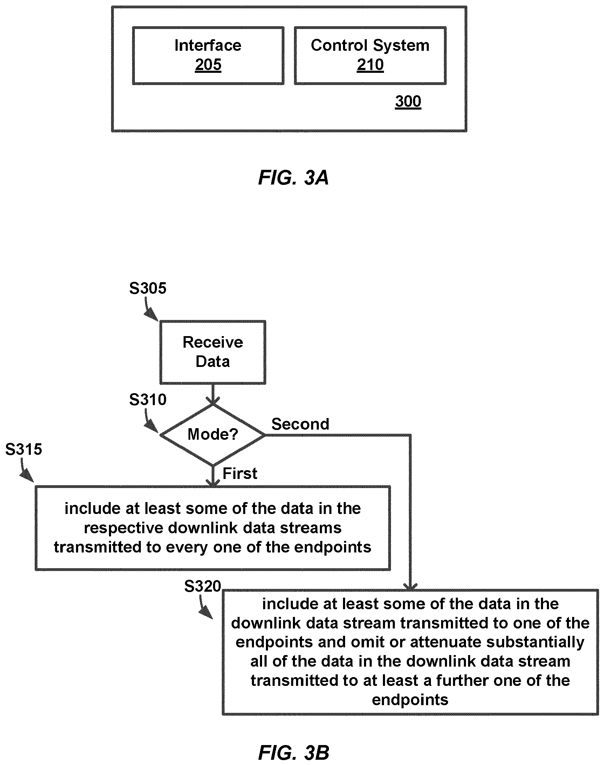

As shown in Fig. 3A, an apparatus 300, embodying the virtual-meeting server 140, comprises an interface 205 and a control system 210. The interface 205 is configured to receive a respective uplink data stream from each of three or more further apparatuses, such as any three of the virtual-meeting endpoints 105, 110, 115, 120, and for transmitting a respective downlink data stream to each of the further apparatuses. The control system 210 is in communication with the interface 205.

As shown in Fig. 3B, the control system 210 of the apparatus 300 is configured to receive, at step S305, first data in the uplink data stream received from a first one of the further apparatuses, e.g. the virtual-meeting endpoint 105. The first data may comprise, for example, any one or more of audio data comprising speech and/or other sound captured by the first one of the further apparatuses; video data comprising images captured by the first one of the further apparatuses; program files; screen-sharing data; or the like.

Hereinbelow, for convenience, instead of referring to the first one of the further apparatuses, the description will refer simply to the virtual-meeting endpoint 105.

At step S310, the control system 210 of the apparatus 300 is configured to determine whether to proceed according to a first mode or a second mode. As will be described below, this determination may be made based on a user request (e.g., a user requests that the apparatus 300 proceed according to the second mode) or based on a decision made by the apparatus 300 of its own volition.

In the first mode first mode, at step S315, the control system 210 of the apparatus 300 includes at least some of the first data in the respective downlink data streams transmitted to every other one of the further apparatuses, e.g. the virtual-meeting endpoints 110, 115, 120.

In the second mode, at step S320, the control system 210 of the apparatus 300 includes at least some of the first data in the downlink data stream transmitted to at least a second one of the further apparatuses, e.g. the virtual-meeting endpoint 110. The control system 210, in the second mode, omits or attenuates (e.g., by applying a gain of less than 1, which typically is not more than 0.5, and preferably is not more than 0.1) substantially all of the first data in the downlink data stream transmitted to at least a third one of the further apparatuses, e.g. the virtual-meeting endpoints 115, 120; for example, in the present embodiment none of the audio data received from the virtual-meeting endpoint 105 will be transmitted to the virtual-meeting endpoints 115, 120.

Hereinbelow, for convenience, instead of referring to the second one of the further apparatuses, the description will refer to the virtual-meeting endpoint 110, and instead of referring to at least a third one of the further apparatuses, the description will refer to the virtual-meeting endpoints 115, 120.

It will be appreciated that if the apparatus 300 is operating in the first mode then each participant in a virtual meeting can hear speech from any other participant in the virtual meeting; in the present example, that means participants using the virtual-meeting endpoints 110, 115, 120 can hear speech from the participant(s) using the virtual-meeting endpoint 105. In contrast, if the apparatus 300 is operating in the second mode then a certain one (or more) of the participants can be heard by only a subset of the other participants; in the present example, that means only the participant(s) using the virtual-meeting endpoint 110 can hear speech from the participant(s) using the virtual-meeting endpoint 105. Thus the second mode can enable private communication, within a virtual meeting, between a subset of participants of the virtual meeting; the private communication may, for example, be unidirectional, from one of the virtual-meeting endpoints to one or more other virtual-meeting endpoints.

The control system 210 of the apparatus 300, in the second mode, receives second data in the uplink data stream received from the virtual-meeting endpoint 110. The second data may comprise, for example, any one or more of audio data comprising speech and/or other sound captured by the virtual-meeting endpoint 110; video data comprising images captured by the virtual-meeting endpoint 110; program files; screen-sharing data; or the like.

The control system 210 of the apparatus 300, in the second mode, includes at least some of the second data in the downlink data stream transmitted to the virtual-meeting endpoint 105. The control system 210 omits or attenuates substantially all of the second data from the downlink data stream transmitted to the virtual-meeting endpoints 115, 120; for example, in the present embodiment none of the audio data received from the virtual-meeting endpoint 110 will be transmitted to the virtual-meeting endpoints 115, 120. It will be appreciated, therefore, that the aforementioned private communication (enabled by the second mode) may, for example, be bidirectional between any two or more of the virtual-meeting endpoints.

It will be appreciated that the aforementioned private communication enabled by the second mode may involve three or more virtual-meeting endpoints, in which case each of them would receive audio and/or video data from any other of them; this is simply a matter of selecting, from the participants in a virtual meeting, a subset of participants who are to be party to the private communication.

The control system 210 of the apparatus 300, in the second mode, receives third data in the uplink data stream received from the virtual-meeting endpoint 120. The third data may comprise, for example, any one or more of audio data comprising speech and/or other sound captured by the virtual-meeting endpoint 120; video data comprising images captured by the virtual-meeting endpoint 120; program files; screen-sharing data; or the like.

The control system 210, in the second mode, includes at least some of the third data in the respective downlink data streams transmitted to the virtual-meeting endpoints 105, 110, 115. It will therefore be appreciated that, in the second mode, virtual-meeting endpoints which are party to the private communication (enabled by the second mode) are also able to receive audio data and/or video data from virtual-meeting endpoints which are not party to the private communication. For example, in a meeting comprising, say, ten participants, where one of the participants is giving a presentation, the apparatus 300, in the second mode, enables another two of the participants to have a private discussion while still being able to hear (and perhaps see) the presenter give his or her presentation.

Referring to the determination at step 310, described above, the first mode may be the default mode. Then, transitioning from the first mode to the second mode is done in response to a user request or by the apparatus 300 of its own volition.

The user request may be received from any one or more of the virtual-meeting endpoints 105, 110, 115, 120. For example, in order to facilitate a conversation between the virtual-meeting endpoint 105 and the virtual-meeting endpoint 110, the user request may comprise at least one of: control information received from the virtual-meeting endpoint 105; or control information received from the virtual-meeting endpoint 110. In which case, the control information received from the virtual-meeting endpoint 105 may identify (at least) the virtual-meeting endpoint 110; likewise, the control information received from the virtual-meeting endpoint 110 may identify (at least) the virtual-meeting endpoint 105.

### IV. Server-Initiated Private Communication

The following description assumes that, to begin with, at least the virtual-meeting endpoints 110, 115, 120 are joined to a virtual meeting hosted by virtual-meeting server 140, embodied in the apparatus 300 operating in the first mode. The following description concerns the transition from the first mode to the second mode in response to a decision by the apparatus 300 of its own volition.

It is noted that the control system 210 is configured to determine and then store to memory the respective times at which the further apparatuses joined the virtual meeting (e.g., as an independent indication, such as 4.15 PM (GMT), and/or as a relative indication, such as 601.24 seconds after a start time of the virtual meeting). The control system 210 is further configured to determine and store to memory the start time of the virtual meeting; for example, the start time could be the time at which the virtual meeting was scheduled to start, the time at which an earliest-joining one of the further apparatuses joined the virtual meeting or the time at which a second-to-join one of the further apparatuses joined the virtual meeting.

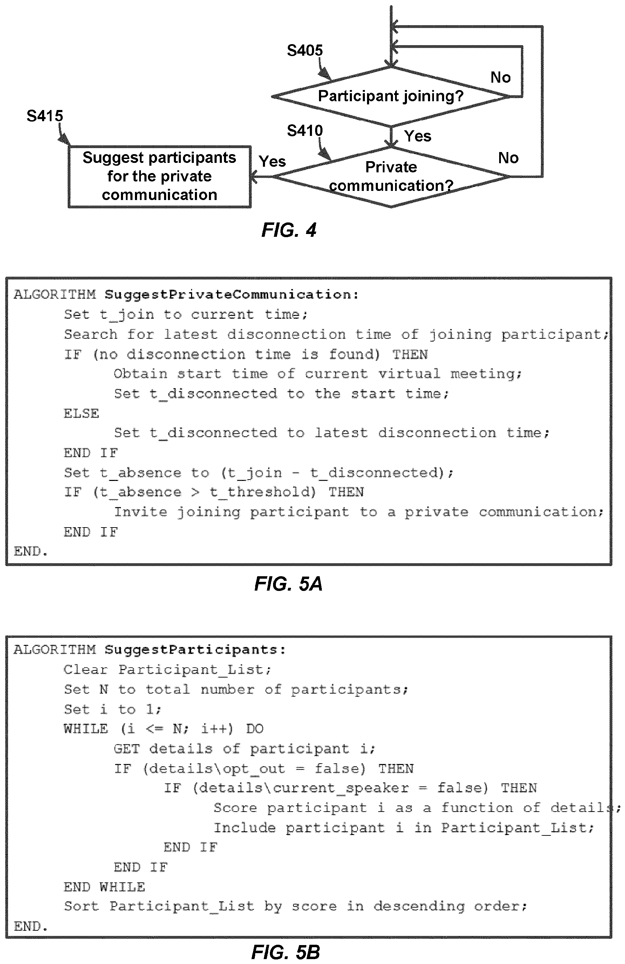

Referring to Fig. 4, the apparatus 300 is responsive to a new virtual-meeting endpoint joining a current virtual meeting. At step S405, the control system 210 of the apparatus 300 determines that the virtual-meeting endpoint 105 is joining the virtual meeting and, in response, proceeds to step S410.

At step S410, the control system 210 of the apparatus 300 determines that the virtual-meeting endpoint 105 is joining the virtual meeting after a period of absence whose duration exceeds a threshold (for example, threshold may be set at 60 seconds; no specific value of the threshold is essential; e.g., it may be adjusted in accordance with user preference), and therefore that the virtual-meeting endpoint 105 should be invited to hold a private communication with the (respective) user(s) of at least one of the already-joined the virtual-meeting endpoints 110, 115, 120. Fig. 5A shows a pseudocode algorithm, labelled SuggestPrivateCommunication, suitable for making said determination.

According to the SuggestPrivateCommunication algorithm, if the virtual-meeting endpoint 105 is joining the virtual meeting for the first time, then the control system 210 retrieves from memory the start time of the virtual meeting, determines at what time the virtual-meeting endpoint 105 joined the virtual meeting and then compares the start time with the join time to determine the duration of the period of absence.

It is noted that the control system 210 is configured to determine and then store to memory, in response to one of the further apparatuses disconnecting from the virtual meeting, the time at which said one of the further apparatuses disconnected (e.g., as an independent indication, such as 4.15 PM (GMT), or as a relative indication, such as 601.24 seconds after the start time of the virtual meeting).

The foregoing description discusses the joining and disconnecting from a virtual meeting by apparatuses, which in some embodiments is what the control system 210 may log and take account of. In some embodiments, the joining and disconnecting from a virtual meeting *by participants* is relevant instead or as well, in which embodiments the control system 210 as access to respective identifiers of the participants. For example, a participant may have joined a virtual meeting using a teleconferencing apparatus installed in a meeting room, and then subsequently may have left the meeting room and re-joined the virtual meeting using e.g. his or her mobile phone: in this scenario, the control system 210 may log and take account of the join time and the re-join time of the participant as well as or instead of the respective join times of the teleconferencing apparatus and the mobile phone.

According to the SuggestPrivateCommunication algorithm, if the virtual-meeting endpoint 105 is re-joining the virtual meeting (having previously disconnected therefrom), then the control system 210 retrieves from memory the (most recent) disconnection time of the virtual-meeting endpoint 105, determines at what time the virtual-meeting endpoint 105 re-joined the virtual meeting and then compares the disconnection time with the re-join time to determine the duration of the period of absence.

The control system 210 of apparatus 300 is further configured to select, at least provisionally, one or more of the virtual-meeting endpoints 110, 115, 120 to receive, in the second mode, said at least some of the first data. In this embodiment, the control system 210 is configured to select, at least provisionally, the one of the virtual-meeting endpoints 110, 115, 120 which lies at the top of a sorted list of the virtual-meeting endpoints 110, 115, 120, which list may comprise all of the virtual endpoints (except, of course, the virtual-meeting endpoint 105) or a subset of them.

Referring to Fig. 4, the control system 210 of apparatus 300, as a result of determining at step S410 that a private communication should be suggested, proceeds at step S415 to generate (or refresh) the sorted list of the further apparatuses; a pseudocode algorithm suitable for this, labelled SuggestParticipants, is shown in Fig. 5B.

According to the SuggestParticipants algorithm, the control system 210 of apparatus 300 obtains details of each of the participants and uses the details to determine which of the participants should be added to the list and which should not. The obtained details include: respective connection-quality indicators of the further apparatuses, indicating the quality levels of the further apparatuses' respective connections to the virtual meeting; bandwidth indicators of the further apparatuses, indicating the bandwidth of the further apparatuses respective connections to the virtual meeting; respective participant-number indicators of the further apparatuses, indicating the respective numbers of virtual-meeting participants associated with the further apparatuses (e.g., if one of the further apparatuses is embodied in a meeting-room conferencing system then there may, sometimes, be upwards of a dozen participants (i.e., all of the occupants of the meeting room) associated with that one of the further apparatuses).

To obtain connection-quality indicators for a participant, the server may periodically receive telemetry data from the client detailing network characteristics such as the frequency and duration of bursts of packet loss and total roundtrip latency. This telemetry data may also contain aggregate statistics about the contents of the information being sent to the server, such as the amount of perceived echo, the characteristics of the audio device (e.g. give preference to devices with low audio pull jitter, give preference to headsets over speaker phones), and video quality metrics (e.g. give preference to video containing faces, or with high signal-to-noise ratio).

According to the SuggestParticipants algorithm, the control system 210 of apparatus 300 omits from the list any of the further apparatuses whose details show that its uplink data stream includes substantially no voice activity. Typically, a participant who is currently speaking is not a participant with whom one would want to have a private communication "on the side". Similarly, the control system 210 of apparatus 300 omits from the list any of the further apparatuses whose details show that the value of its manual-opt-out flag has been set to true. Some participants in a virtual meeting may know in advance that they do not want to be disturbed by private communication some other participants, and so can block private communications by setting the value of the manual-opt-out flag to true.

According to the SuggestParticipants algorithm, the control system 210 of apparatus 300 gives each of the participants a score, the score being a function of the obtained details of the respective participant. According to the function, with all other considerations being equal, one of the further apparatuses which was joined to the virtual meeting during at least a portion of the period of absence will appear higher in the list than one of the further apparatuses which was joined to the virtual meeting for less (or none) of the period of absence, and those ones of the further apparatuses which joined the virtual meeting at or near the start time (the respective (latest) join times lie within a predetermined interval containing the start time of the virtual meeting) will appear at the top end of the list. According to the function, with all other considerations being equal, the one of the further apparatuses which has the highest connection-quality indicator will appear highest in the list, and those ones of the further apparatuses which have a connection-quality indicator that exceeds a predetermined quality threshold will appear at the top end of the list. According to the function, with all other considerations being equal, the one of the further apparatuses which has the highest bandwidth indicator will appear highest in the list, and those ones of the further apparatuses which have a bandwidth indicator that exceeds a predetermined quality threshold will appear at the top end of the list. According to the function, with all other considerations being equal, the ones of the further apparatuses which have participant-number indicators that are below a predetermined participant-number threshold (preferably, the participant-number threshold is set at 2) will appear at the top end of the list. Another input to the score function may be the participant's position in the company organisation hierarchy, if such information is available, with preference given to those lower in the organisation chart who are perhaps less integral to the main conversation.

The control system 210 includes said at least some of the first data in the respective downlink data stream, or streams, of the selected one or more of the further apparatuses if, and only if, doing so is approved by the first one of the further apparatuses. In the present embodiment, the control system 210 is configured to identify, to the first one of the further apparatuses, the selected one or more of the further apparatuses. The first one of the further apparatuses is configured to, in response, inform the user thereof that she may enter into a private communication with the user(s) of the selected one or more of the further apparatuses, which she may accept or decline. If she accepts, the first one of the further apparatuses sends the approval to the apparatus 300.

The control system 210 is configured to include said at least some of the first data in the respective downlink data stream, or streams, of the selected one or more of the further apparatuses if, and only if, doing so is approved by the selected one or more of the further apparatuses. In the present embodiment, the control system 210 is configured to notify the selected one or more of the further apparatuses of the option to receive said at least some of the first data. Each of the selected one or more of the further apparatuses is configured to, in response, inform the user thereof that she may enter a private communication with the user(s) of the first one of the further apparatuses, which she may accept or decline. If she accepts, the corresponding one of the further apparatuses sends its approval to the apparatus 300.

### V. Rendering Virtual-Meeting Audio Data

Preferably, the virtual-meeting endpoint is capable of presenting to the user a two- or three-dimensional audio scene representative of the virtual meeting. For example, one embodiment of the virtual-meeting endpoint (discussed below, in section VI) is configured to present the two- or three-dimensional audio scene via a connected headphone, using conventional binaural techniques.

The control system 210 is configured to include spatial information in the downlink data stream transmitted, in the second mode, to the virtual-meeting endpoint 110. The spatial information specifies a desired location of the virtual-meeting endpoint 105 in the two- or three-dimensional audio scene. The spatial information also specifies a desired location of the virtual-meeting endpoint 120 in the rendered two- or three-dimensional audio scene, the desired location of the virtual-meeting endpoint 120 being different from the desired location of the virtual-meeting endpoint 105. The spatial information may be "prebaked" into the data in the downlink data stream; for example, said data may comprise a pair of binaural audio signals suitable for driving the aforementioned connected headphone, whereby in the resulting rendered audio scene the virtual-meeting endpoint 105 and the virtual-meeting endpoint 120 are located in their respective desired locations. Alternatively, sound from each one of the virtual-meeting endpoints may be represented by its own audio object or stem, and in the spatial information may be represented in respective metadata accompanying the audio objects or stems. No particular manner of rendering or transmitting specialised audio data is essential.

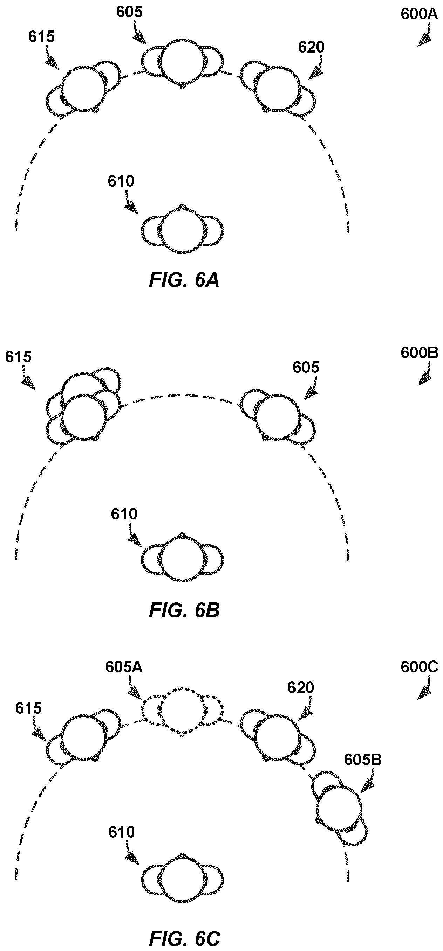

As shown in Fig. 6A, the audio scene may comprise a two-dimensional audio scene 600A in which a respective unique location is allocated to each one of the further apparatuses (provided that the total number of further apparatuses does not exceed a threshold). Therefore, for example, the two-dimensional audio scene 600A heard by the user of the virtual-meeting endpoint 110 will include respective different locations 605, 615, 620 (relative to a listening location 610) for sound captured at the virtual-meeting endpoints 105, 115, 120.

As shown in Fig. 6B, the audio scene may comprise a two-dimensional audio scene 600B in which one location 605 is allocated to any of the further apparatuses which is party to a private communication, and a different location 615 is allocated to any of the further apparatuses which is/are not party to the private communication. Therefore, for example, the two-dimensional audio scene 600B heard by the user of the virtual-meeting endpoint 110 will include one location 605 (relative to a listening location 610) for sound captured at the virtual-meeting endpoint 105, and a different location 615 (relative to a listening location 610) for sound captured at any of the virtual meeting endpoints 115, 120.

As shown in Fig. 6C, the audio scene may comprise a two-dimensional audio scene 600C in which the allocation of location depends on whether or not a given one of the further apparatuses is party to a private communication. Therefore, for example, the two-dimensional audio scene 600C heard by the user of the virtual-meeting endpoint 110 will include one location 605A (relative to a listening location 610) for sound captured at the virtual-meeting endpoint 105 when the virtual-meeting endpoint 105 is party to a private communication, and a different location 605B (relative to a listening location 610) for sound captured at the virtual-meeting endpoint 105 when the virtual-meeting endpoint 105 is not party to the private communication. For example, at least two unique locations (one for participating in a private communication, the other for participating in the "full" virtual meeting) may be allocated to each one of the further apparatuses (provided that the total number of further apparatuses does not exceed a threshold).

### VI. Virtual-Meeting Endpoint

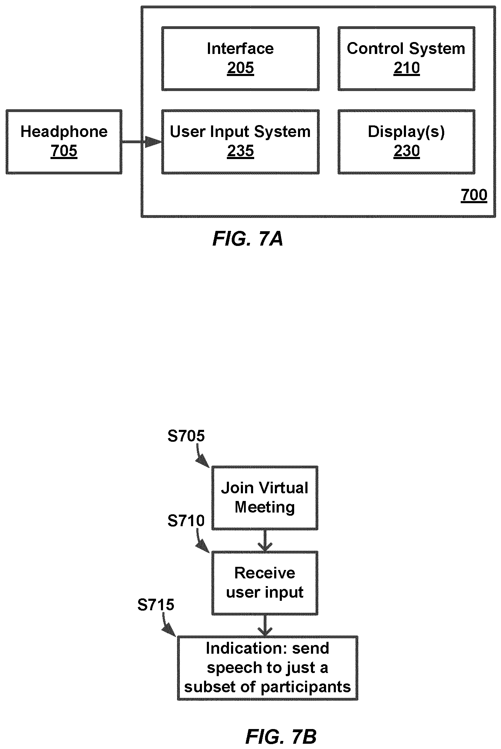

Referring to Fig. 7A, an apparatus 700 configured to embody one of the virtual-meeting endpoints comprises an interface 205 configured to transmit an uplink data stream to the virtual-meeting server 140, and to receive a downlink data stream from the virtual-meeting server 140. The apparatus 700 further comprises a user input system 235 configured to receive one or more inputs from a user. The apparatus 700 further comprises a control system 210 in communication with the interface and the user input system.

As shown in Fig. 7B, the control system joins, at step S705 of a method performed by the apparatus 700, a virtual meeting hosted by the virtual-meeting server 140.

The control system 210 receives, at step S710 of the method, a first input from the user.

At step S715 of the method, the control system 210 indicates to the virtual-meeting server 140, in response to receiving the first input from the user, and when two or more further apparatuses are joined to the virtual meeting, that at least some of the data in the uplink data stream is to be sent to just a subset of the further apparatuses. The first input from the user identifies the subset of the further apparatuses.

As noted above, a private communication can be server-initiated. In that case, the first input typically comprises an acceptance of an invitation to enter into a private communication with the user(s) of the subset of the further apparatuses; as such, the first input from the user identifies the subset of the further apparatuses by being responsive to an invitation which identifies the subset of the further apparatuses.

In addition to accepting or declining an invitation to join a server-initiated private communication, the apparatus 700 is also configured to enable the user to initiate a private communication. In that case, the first input comprises a user request to enter into a private communication, and indicates the (user-selected) subset of the further apparatuses.

### VII. User Interface

In the present embodiment, the apparatus 700 is connected to a head-tracking headphone 705 (which in the present embodiment is part of the user input system 235), and the first input from the user is received from the head-tracking headphone 705. As well as generating an audio signal representative of the speech of the user, and rendering into sound an audio signal representative of far end speech, the head-tracking headphone 705 is also configured to generate information indicative of the current direction in which the user is facing. The aforementioned first input from the user, from the head-tracking headphone 705, is indicative of the user facing, or turning to face, in a first direction.

The control system 710 is configured to render, via the head-tracking headphone 705, a two- or three-dimensional audio scene representative of sounds connected with the virtual meeting (e.g., as described above in section V), such as speech of participants in the virtual meeting, using spatial information as noted above.

In the audio scene, at least one virtual location is allocated to the subset of the further apparatuses. The first direction corresponds to said at least one virtual location. Thus, the user can indicate that she would like to enter into (or remain in) a private communication by facing a virtual location of a participant in the private communication. It will be appreciated that the head-tracking feature of the headphone 705 is optional; other embodiments may use other suitable means by which the user can indicate that she would like to enter into (or remain in) a private communication.

The apparatus 700 comprises an output device 230 for presenting information to the user. The control system 210 is further configured to present to the user, via the output device230, information about one or more of the further apparatuses. In the present embodiment, the output device 230 comprises a visual display unit and the control system 210 is configured to display to the user, via the visual display unit, the information about the one or more further apparatuses. For example, the information about the one or more further apparatuses may identify the one or more further apparatuses and/or identify a user, or respective users, associated with the one or more other apparatuses. The information about the one or more further apparatuses may, for example, comprise an indication, or respective indications, of how long the one or more further apparatuses has, or have, been joined to the virtual meeting. Consequently, the user would be able to, for example, initiate a private communication with a participant who is known to the user and who has been participating in the virtual meeting since it began.

### C. Equivalents, Alternatives & Miscellaneous

Further embodiments of the present disclosure will become apparent to a person skilled in the art after studying the description above.

As noted above, if the apparatus 300 is operating in the second mode then a certain one (or more) of the participants can be heard by only a subset of the other participants. This does not necessarily mean that the subset of the other participants receive all of the audio data that was included in the uplink stream from the certain one (or more) of the participants. Further, the audio data received by the subset of the other participants may be a processed and therefore different version of the audio data that was included in the uplink stream from the certain one (or more) of the participants. For example, the subset of the other participants may receive no audio data related to the private conversation enabled by the second mode under certain circumstances, such as the occurrence of events in the main meeting which are deemed to be of importance (e.g., a participant joining the meeting, a previously-silent participant speaking, one or more participants speaking particularly loudly, two or more participants speaking at the same time, etc.). By way of another example, the audio data related to the private conversation enabled by the second mode may be processed by applying different amounts of reverberation, attenuating the audio signals. These variations may be determined based on server-side settings, participant-side settings, or a combination of these.

If the apparatus 300 is operating in the second mode then substantially all of the audio data received from a certain one (or more) of the participants is omitted or attenuated in the downlink data stream transmitted to at least one of the other participants. Therefore, said at least one of the other participants may hear nothing of the private conversation enabled by the second mode, may hear a quieter version of the private conversation enabled by the second mode (e.g., bearing some similarities to being able to hear one participant whispering to another participants during an in-person meeting), or may hear an audible indication that such a private conversation is underway (for example, the audible indication may be responsive to the presence or absence of a voice activity detection (VAD) flag rather than being based on speech of participants).

There are various suitable ways of determining respective connection-quality indicators of the further apparatuses. For example, by one or more of: assessing packet loss rate and/or burstiness factor; detecting artefacts caused by dual tone multifrequency (DTMF) removal processing; taking account of the codec requested during the respective handshakes as participants join a virtual meeting; taking account of the use (or not) of video hardware; taking account of whether a hardwired (e.g., Ethernet) or wireless (e.g., via cellular network, such as a 4G network); or the like.

There are various suitable ways of determining respective (audio) bandwidth indicators of the further apparatuses. For example, by one or more of: analysing the content of the speech or other audio signals to determine the highest frequency component in the audio data; analysing metadata and/or handshake data which indicates the sample rate of the audio data; or the like.

There are various suitable ways of determining respective participant-number indicators of the further apparatuses. For example, by one or more of: the further apparatuses being configured to have participants enter their names; by using voice analysis techniques (such as talker diarization) to determine how many people are around the phone; or the like.

Even though the present description and drawings disclose embodiments and examples, the disclosure is not restricted to these specific examples. Numerous modifications and variations can be made without departing from the scope of the present disclosure, which is defined by the accompanying claims.

Any reference signs appearing in the claims are not to be understood as limiting their scope.

Additionally, variations to the disclosed embodiments can be understood and effected by the skilled person in practicing the disclosure, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. An apparatus (300) comprising:
an interface (205) configured to receive a respective uplink data stream from each of three or more further apparatuses, and for transmitting a respective downlink data stream to each of the further apparatuses; and
a control system (210) in communication with the interface, the control system being configured:
to receive (S305) first data in the uplink data stream received from a first one of the further apparatuses;
in a first mode, to include (S315) at least some of the first data in the respective downlink data streams transmitted to every other one of the further apparatuses; and
in a second mode, to include (S320) at least some of the first data in the downlink data stream transmitted to a second one of the further apparatuses and to omit or attenuate substantially all of the first data in the downlink data stream transmitted to at least a third one of the further apparatuses,
**CHARACTERISED IN THAT** the control system is further configured:
to determine that the first one of the further apparatuses is joining, after a period of absence whose duration exceeds a threshold, an existing virtual meeting hosted by the apparatus;
to transition into the second mode in response to the determination; and
to select, at least provisionally, one or more of the further apparatuses to receive, in the second mode, said at least some of the first data, wherein said selection is based on one or more system-related parameters and/or one or more meeting-related parameters.

2. The apparatus of Claim 1 wherein said selecting comprises:
determining respective connection-quality indicators of the further apparatuses, the connection-quality indicators being indicative of the quality levels of the further apparatuses' respective connections to the virtual meeting, which is the, or one of the, system-related parameters; and
selecting, at least provisionally, from the further apparatuses, an apparatus having a connection-quality indicator that exceeds a predetermined quality threshold.

3. The apparatus of Claim 1 or Claim 2 wherein said selecting comprises:
determining respective bandwidth indicators of the further apparatuses, the bandwidth indicators being indicative of the bandwidth of the further apparatuses' respective connections to the virtual meeting, which is the, or one of the, system-related parameters; and
selecting, at least provisionally, from the further apparatuses, an apparatus having a bandwidth indicator that exceeds a predetermined bandwidth threshold.

4. The apparatus of Claim 1 wherein said selecting comprises:
determining respective join times of respective participants who joined using the further apparatuses, the respective join times being indicative of when the participants joined the virtual meeting, which is the, or one of the, meeting-related parameters; and
selecting, at least provisionally, from the further apparatuses, an apparatus used by a participant whose join time lies within a predetermined interval containing a start time of the virtual meeting.

5. The apparatus of any one of the preceding Claims, wherein said selecting, at least provisionally, the one or more of the further apparatuses comprises:
determining respective participant-number indicators of the further apparatuses, the participant-number indicators being indicative of the respective numbers of virtual-meeting participants associated with the further apparatuses, which is the, or one of the, meeting-related parameters; and
selecting, at least provisionally, from the further apparatuses, an apparatus having a participant-number indicator that is below a predetermined participant-number threshold.

6. The apparatus of any one of the preceding Claims, wherein said selecting, at least provisionally, the one or more of the further apparatuses comprises selecting, at least provisionally, one of the further apparatuses whose uplink data stream includes substantially no voice activity, which is the, or one of the, meeting-related parameters.

7. The apparatus of any one of the preceding Claims, wherein said selecting, at least provisionally, the one or more of the further apparatuses comprises selecting, at least provisionally, one of the further apparatuses which was joined to the virtual meeting during at least a portion of the period of absence, which is the, or one of the, meeting-related parameters.

8. A method, in an apparatus (300) configured to receive a respective uplink data stream from each of three or more further apparatuses, and for transmitting a respective downlink data stream to each of the further apparatuses, the method comprising
receiving (S305) first data in the uplink data stream received from a first one of the further apparatuses;
in a first mode, including (S315) at least some of the first data in the respective downlink data streams transmitted to every other one of the further apparatuses; and
in a second mode, including (S320) at least some of the first data in the downlink data stream transmitted to a second one of the further apparatuses and omitting or attenuating substantially all of the first data in the downlink data stream transmitted to at least a third one of the further apparatuses,
**CHARACTERISED BY** further comprising:
determining that the first one of the further apparatuses is joining, after a period of absence whose duration exceeds a threshold, an existing virtual meeting hosted by the apparatus, at least the second and third ones of the further apparatuses being already joined to the virtual meeting;
transitioning into the second mode in response to the determination; and
selecting, at least provisionally, the second one of the further apparatuses to receive, in the second mode, said at least some of the first data, wherein said selection is based on one or more system-related parameters and/or one or more meeting-related parameters.

9. The method of Claim 8 wherein said selecting comprises:
determining respective connection-quality indicators of the further apparatuses, the connection-quality indicators being indicative of the quality levels of the further apparatuses' respective connections to the virtual meeting, which is the, or one of the, system-related parameters; and
selecting, at least provisionally, from the further apparatuses, an apparatus having a connection-quality indicator that exceeds a predetermined quality threshold.

10. The method of Claim 8 or Claim 9 wherein said selecting comprises:
determining respective bandwidth indicators of the further apparatuses, the bandwidth indicators being indicative of the bandwidth of the further apparatuses' respective connections to the virtual meeting, which is the, or one of the, system-related parameters; and
selecting, at least provisionally, from the further apparatuses, an apparatus having a bandwidth indicator that exceeds a predetermined bandwidth threshold.

11. The method of Claim 8 wherein said selecting comprises:
determining respective join times of respective participants who joined using the further apparatuses, the respective join times being indicative of when the participants joined the virtual meeting, which is the, or one of the, meeting-related parameters; and
selecting, at least provisionally, from the further apparatuses, an apparatus used by a participant whose join time lies within a predetermined interval containing a start time of the virtual meeting.

12. The method of any one of Claims 8 to 11, wherein said selecting, at least provisionally, the one or more of the further apparatuses comprises:
determining respective participant-number indicators of the further apparatuses, the participant-number indicators being indicative of the respective numbers of virtual-meeting participants associated with the further apparatuses, which is the, or one of the, meeting-related parameters; and
selecting, at least provisionally, from the further apparatuses, an apparatus having a participant-number indicator that is below a predetermined participant-number threshold.

13. The method of any one of Claims 8 to 12, wherein said selecting, at least provisionally, the one or more of the further apparatuses comprises selecting, at least provisionally, one of the further apparatuses whose uplink data stream includes substantially no voice activity, which is the, or one of the, meeting-related parameters.

14. The method of any one of Claims 8 to 13, wherein said selecting, at least provisionally, the one or more of the further apparatuses comprises selecting, at least provisionally, one of the further apparatuses which was joined to the virtual meeting during at least a portion of the period of absence, which is the, or one of the, meeting-related parameters.

15. A non-transitory, computer-readable storage medium on which is stored a computer program which, when executed by a control system of an apparatus, configures the apparatus to perform the method of any one of claims 8 to 14.

## Patentansprüche

1. Einrichtung (300), umfassend:
eine Schnittstelle (205), die dazu konfiguriert ist, einen jeweiligen Uplink-Datenstrom von jeder aus drei oder mehr weiteren Einrichtungen zu empfangen, und dafür, einen jeweiligen Downlink-Datenstrom an jede der weiteren Einrichtungen zu übertragen; und
ein Steuerungssystem (210), das mit der Schnittstelle in Kommunikation steht, wobei das Steuerungssystem dazu konfiguriert ist:
erste Daten in dem Uplink-Datenstrom, der von einer ersten der weiteren Einrichtungen empfangen wird, zu empfangen (S305);
in einem ersten Modus zumindest einige der ersten Daten in die jeweiligen Downlink-Datenströme, die an jede andere der weiteren Einrichtungen übertragen werden, einzuschließen (S315); und
in einem zweiten Modus zumindest einige der ersten Daten in den Downlink-Datenstrom, der an eine zweite der weiteren Einrichtungen übertragen wird, einzuschließen (S320), und im Wesentlichen alle der ersten Daten in dem Downlink-Datenstrom, der an zumindest eine dritte der weiteren Einrichtungen übertragen wird, wegzulassen oder zu vermindern,
**DADURCH GEKENNZEICHNET, DASS** das Steuerungssystem weiter dazu konfiguriert ist:
zu bestimmen, dass die erste der weiteren Einrichtungen nach einem Abwesenheitszeitraum, dessen Dauer eine Schwelle übersteigt, einem bestehenden virtuellen Meeting beitritt, das von der Einrichtung gehostet wird;
in Antwort auf die Bestimmung in den zweiten Modus überzugehen; und
zumindest vorläufig eine oder mehrere der weiteren Einrichtungen auszuwählen, um im zweiten Modus die zumindest einigen der ersten Daten zu empfangen, wobei die Auswahl auf einem oder mehreren systembezogenen Parametern und/oder einem oder mehreren meeting-bezogenen Parametern basiert.

2. Einrichtung nach Anspruch 1, wobei das Auswählen umfasst:
Bestimmen von jeweiligen Verbindungsqualitäts-Indikatoren der weiteren Einrichtungen, wobei die Verbindungsqualitäts-Indikatoren die Qualitätsniveaus der jeweiligen Verbindungen der weiteren Einrichtungen zu dem virtuellen Meeting anzeigen, was der oder einer der systembezogenen Parameter ist; und
zumindest vorläufiges Auswählen einer Einrichtung aus den weiteren Einrichtungen, die einen Verbindungsqualitäts-Indikator aufweist, der eine vorbestimmte Qualitätsschwelle übersteigt.

3. Einrichtung nach Anspruch 1 oder Anspruch 2, wobei das Auswählen umfasst:
Bestimmen von jeweiligen Bandbreiten-Indikatoren der weiteren Einrichtungen, wobei die Bandbreiten-Indikatoren die Bandbreite der jeweiligen Verbindungen der weiteren Einrichtungen zu dem virtuellen Meeting anzeigen, was der oder einer der systembezogenen Parameter ist; und
zumindest vorläufiges Auswählen einer Einrichtung aus den weiteren Einrichtungen, die einen Bandbreiten-Indikator aufweist, der eine vorbestimmte Bandbreitenschwelle übersteigt.

4. Einrichtung nach Anspruch 1, wobei das Auswählen umfasst:
Bestimmen von jeweiligen Beitrittszeiten jeweiliger Teilnehmer, die unter Verwendung der weiteren Einrichtungen beigetreten sind, wobei die jeweiligen Beitrittszeiten anzeigen, wann die Teilnehmer dem virtuellen Meeting beigetreten sind, was der oder einer der meeting-bezogenen Parameter ist; und
zumindest vorläufiges Auswählen einer Einrichtung aus den weiteren Einrichtungen, die von einem Teilnehmer verwendet wird, dessen Beitrittszeit innerhalb eines vorbestimmten Intervalls liegt, das eine Startzeit des virtuellen Meetings enthält.

5. Einrichtung nach einem der vorstehenden Ansprüche, wobei das zumindest vorläufige Auswählen der einen oder mehreren der weiteren Einrichtungen umfasst:
Bestimmen von jeweiligen Teilnehmeranzahl-Indikatoren der weiteren Einrichtungen, wobei die Teilnehmeranzahl-Indikatoren die jeweiligen Anzahlen von Teilnehmern eines virtuellen Meetings anzeigen, die mit den weiteren Einrichtungen assoziiert sind, was der oder einer der meeting-bezogenen Parameter ist; und
zumindest vorläufiges Auswählen einer Einrichtung aus den weiteren Einrichtungen, die einen Teilnehmeranzahl-Indikator aufweist, der unterhalb einer vorbestimmten Teilnehmeranzahlschwelle liegt.

6. Einrichtung nach einem der vorstehenden Ansprüche, wobei das zumindest vorläufige Auswählen der einen oder mehreren der weiteren Einrichtungen das zumindest vorläufige Auswählen einer der weiteren Einrichtungen umfasst, deren Uplink-Datenstrom im Wesentlichen keine Sprachaktivität einschließt, was der oder einer der meeting-bezogenen Parameter ist.

7. Einrichtung nach einem der vorstehenden Ansprüche, wobei das zumindest vorläufige Auswählen der einen oder mehreren der weiteren Einrichtungen das zumindest vorläufige Auswählen einer der weiteren Einrichtungen umfasst, die während zumindest eines Teils des Abwesenheitszeitraums dem virtuellen Meeting beigetreten ist, was der oder einer der meeting-bezogenen Parameter ist.

8. Verfahren in einer Einrichtung (300), die dazu konfiguriert ist, einen jeweiligen Uplink-Datenstrom von jeder aus drei oder mehr weiteren Einrichtungen zu empfangen, und dafür, einen jeweiligen Downlink-Datenstrom an jede der weiteren Einrichtungen zu übertragen, wobei das Verfahren umfasst
Empfangen (S305) von ersten Daten in dem Uplink-Datenstrom, der von einer ersten der weiteren Einrichtungen empfangen wird;
in einem ersten Modus Einschließen (S315) zumindest einiger der ersten Daten in die jeweiligen Downlink-Datenströme, die an jede andere der weiteren Einrichtungen übertragen werden; und
in einem zweiten Modus Einschließen (S320) zumindest einiger der ersten Daten in den Downlink-Datenstrom, der an eine zweite der weiteren Einrichtungen übertragen wird, und Weglassen oder Vermindern im Wesentlichen aller der ersten Daten in dem Downlink-Datenstrom, der an zumindest eine dritte der weiteren Einrichtungen übertragen wird,
**DADURCH GEKENNZEICHNET, DASS** es weiter umfasst:
Bestimmen, dass die erste der weiteren Einrichtungen nach einem Abwesenheitszeitraum, dessen Dauer eine Schwelle übersteigt, einem bestehenden virtuellen Meeting beitritt, das von der Einrichtung gehostet wird, wobei zumindest die zweite und dritte der weiteren Einrichtungen dem virtuellen Meeting bereits beigetreten sind;
Übergehen in den zweiten Modus in Antwort auf die Bestimmung; und
zumindest vorläufiges Auswählen der zweiten der weiteren Einrichtungen, um im zweiten Modus die zumindest einigen der ersten Daten zu empfangen, wobei die Auswahl auf einem oder mehreren systembezogenen Parametern und/oder einem oder mehreren meeting-bezogenen Parametern basiert.

9. Verfahren nach Anspruch 8, wobei das Auswählen umfasst:
Bestimmen von jeweiligen Verbindungsqualitäts-Indikatoren der weiteren Einrichtungen, wobei die Verbindungsqualitäts-Indikatoren die Qualitätsniveaus der jeweiligen Verbindungen der weiteren Einrichtungen zu dem virtuellen Meeting anzeigen, was der oder einer der systembezogenen Parameter ist; und
zumindest vorläufiges Auswählen einer Einrichtung aus den weiteren Einrichtungen, die einen Verbindungsqualitäts-Indikator aufweist, der eine vorbestimmte Qualitätsschwelle übersteigt.

10. Verfahren nach Anspruch 8 oder Anspruch 9, wobei das Auswählen umfasst:
Bestimmen von jeweiligen Bandbreiten-Indikatoren der weiteren Einrichtungen, wobei die Bandbreiten-Indikatoren die Bandbreite der jeweiligen Verbindungen der weiteren Einrichtungen zu dem virtuellen Meeting anzeigen, was der oder einer der systembezogenen Parameter ist; und
zumindest vorläufiges Auswählen einer Einrichtung aus den weiteren Einrichtungen, die einen Bandbreiten-Indikator aufweist, der eine vorbestimmte Bandbreitenschwelle übersteigt.

11. Verfahren nach Anspruch 8, wobei das Auswählen umfasst:
Bestimmen von jeweiligen Beitrittszeiten jeweiliger Teilnehmer, die unter Verwendung der weiteren Einrichtungen beigetreten sind, wobei die jeweiligen Beitrittszeiten anzeigen, wann die Teilnehmer dem virtuellen Meeting beigetreten sind, was der oder einer der meeting-bezogenen Parameter ist; und
zumindest vorläufiges Auswählen einer Einrichtung aus den weiteren Einrichtungen, die von einem Teilnehmer verwendet wird, dessen Beitrittszeit innerhalb eines vorbestimmten Intervalls liegt, das eine Startzeit des virtuellen Meetings enthält.

12. Verfahren nach einem der Ansprüche 8 bis 11, wobei das zumindest vorläufige Auswählen der einen oder mehreren der weiteren Einrichtungen umfasst:
Bestimmen von jeweiligen Teilnehmeranzahl-Indikatoren der weiteren Einrichtungen, wobei die Teilnehmeranzahl-Indikatoren die jeweiligen Anzahlen von Teilnehmern eines virtuellen Meetings anzeigen, die mit den weiteren Einrichtungen assoziiert sind, was der oder einer der meeting-bezogenen Parameter ist; und
zumindest vorläufiges Auswählen einer Einrichtung aus den weiteren Einrichtungen, die einen Teilnehmeranzahl-Indikator aufweist, der unterhalb einer vorbestimmten Teilnehmeranzahlschwelle liegt.

13. Verfahren nach einem der Ansprüche 8 bis 12, wobei das zumindest vorläufige Auswählen der einen oder mehreren der weiteren Einrichtungen das zumindest vorläufige Auswählen einer der weiteren Einrichtungen umfasst, deren Uplink-Datenstrom im Wesentlichen keine Sprachaktivität einschließt, was der oder einer der meeting-bezogenen Parameter ist.

14. Verfahren nach einem der Ansprüche 8 bis 13, wobei das zumindest vorläufige Auswählen der einen oder mehreren der weiteren Einrichtungen das zumindest vorläufige Auswählen einer der weiteren Einrichtungen umfasst, die während zumindest eines Teils des Abwesenheitszeitraums dem virtuellen Meeting beigetreten ist, was der oder einer der meeting-bezogenen Parameter ist.

15. Nicht transitorisches computerlesbares Speichermedium, auf dem ein Computerprogramm gespeichert ist, das, wenn es von einem Steuerungssystem einer Einrichtung ausgeführt wird, die Einrichtung so konfiguriert, dass sie das Verfahren nach einem der Ansprüche 8 bis 14 durchführt.

## Revendications

1. Appareil (300) comprenant :
une interface (205) configurée pour recevoir un flux de données de liaison montante respectif depuis chacun de trois ou plus autres appareils, et pour transmettre un flux de données de liaison descendante respectif à chacun des autres appareils ;
un système de commande (210) en communication avec l'interface, le système de commande étant configuré :
pour recevoir (S305) des premières données dans le flux de données de liaison montante depuis un premier des autres appareils ;
dans un premier mode, pour inclure (S315) au moins une partie des premières données dans les flux de données de liaison descendante respectifs transmis à chacun des autres appareils ; et
dans un second mode, pour inclure (S320) au moins une partie des premières données dans le flux de données de liaison descendante transmis à un second des autres appareils et pour omettre ou atténuer sensiblement l'ensemble des premières données dans le flux de données de liaison descendante transmis à au moins un troisième des autres appareils,
**caractérisé en ce que** le système de commande est en outre configuré :
pour déterminer que le premier des autres appareils se connecte, après une période d'absence dont la durée dépasse un seuil, à une réunion virtuelle existante hébergée par l'appareil ;
pour passer dans le second mode en réponse à la détermination ; et
pour sélectionner, au moins provisoirement, un ou plusieurs des autres appareils pour recevoir, dans le second mode, ladite au moins une partie des premières données, dans lequel ladite sélection est basée sur un ou plusieurs paramètres liés au système et/ou un ou plusieurs paramètres liés à la réunion.

2. Appareil selon la revendication 1 dans lequel ladite sélection comprend :
la détermination d'indicateurs de qualité de connexion respectifs des autres appareils, les indicateurs de qualité de connexion indiquant les niveaux de qualité des connections respectives des autres appareils à la réunion virtuelle, qui est le, ou l'un des paramètres liés au système ; et
la sélection, au moins provisoirement, parmi les autres appareils, d'un appareil ayant un indicateur de qualité de connexion qui dépasse un seuil de qualité prédéterminé.

3. Appareil selon la revendication 1 ou la revendication 2 dans lequel ladite sélection comprend :
la détermination d'indicateurs de bande passante respectifs des autres appareils, les indicateurs de bande passante indiquant la bande passante des connexions respectives des autres appareils à la réunion virtuelle, qui est le, ou l'un des paramètres liés au système ; et
la sélection, au moins provisoirement, parmi les autres appareils, d'un appareil ayant un indicateur de bande passante qui dépasse un seuil de bande passante prédéterminé.

4. Appareil selon la revendication 1 dans lequel ladite sélection comprend :
la détermination d'heures de connexion respectives de participants respectifs qui se sont connectés en utilisant les autres appareils, les heures de connexion respectives indiquant le moment où les participants se sont connectés à la réunion virtuelle, qui est le, ou l'un des paramètres liés à la réunion ; et
la sélection, au moins provisoirement, parmi les autres appareils, d'un appareil utilisé par un participant dont l'heure de connexion se situe dans un intervalle prédéterminé contenant une heure de début de la réunion virtuelle.

5. Appareil selon l'une quelconque des revendications précédentes, dans lequel ladite sélection, au moins provisoirement, des un ou plusieurs autres appareils comprend :
la détermination d'indicateurs de nombre de participants respectifs des autres appareils, les indicateurs de nombre de participants indiquant les nombres respectifs des participants à la réunion virtuelle associés aux autres appareils, qui est le, ou l'un des paramètres liés à la réunion ; et
la sélection, au moins provisoirement, parmi les autres appareils d'un appareil ayant un indicateur de nombre de participants qui est inférieur à un seuil de nombre de participants prédéterminé.

6. Appareil selon l'une quelconque des revendications précédentes, dans lequel ladite sélection, au moins provisoirement, des un ou plusieurs autres appareils comprend la sélection, au moins provisoirement, d'un des autres appareils dont le flux de données de liaison montante ne comprend sensiblement aucune activité vocale, qui est le, ou l'un des paramètres liés à la réunion.

7. Appareil selon l'une quelconque des revendications précédentes, dans lequel ladite sélection, au moins provisoirement, des un ou plusieurs autres appareils comprend la sélection, au moins provisoirement, d'un des autres appareils qui s'est connecté à la réunion virtuelle pendant au moins une partie de la période d'absence, qui est le, ou l'un des paramètres liés à la réunion.

8. Procédé, dans un appareil (300) configuré pour recevoir un flux de données de liaison montante respectif depuis chacun de trois ou plus autres appareils, et pour transmettre un flux de données de liaison descendante respectif à chacun des autres appareils, le procédé comprenant
la réception (S305) de premières données dans le flux de données de liaison montante depuis un premier des autres appareils ;
dans un premier mode, l'inclusion (S315) d'au moins une partie des premières données dans les flux de données de liaison descendante respectifs transmis à chacun des autres appareils ; et
dans un second mode, l'inclusion (S320) d'au moins une partie des premières données dans le flux de données de liaison descendante transmis à un second des autres appareils et l'omission ou l'atténuation sensible de l'ensemble des premières données dans le flux de données de liaison descendante transmis à au moins un troisième des autres appareils,
**caractérisé en ce qu'**il comprend en outre :
la détermination que le premier des autres appareils se connecte, après une période d'absence dont la durée dépasse un seuil, à une réunion virtuelle existante hébergée par l'appareil, au moins les deuxième et troisième des autres appareils s'étant déjà connectés à la réunion virtuelle ;
le passage au second mode en réponse à la détermination ; et
la sélection, au moins provisoirement, du deuxième des autres appareils pour recevoir, dans le second mode, ladite au moins une partie des premières données, dans lequel ladite sélection est basée sur un ou plusieurs paramètres liés au système et/ou un ou plusieurs paramètres liés à la réunion.

9. Procédé selon la revendication 8 dans lequel ladite sélection comprend :
la détermination d'indicateurs de qualité de connexion respectifs des autres appareils, les indicateurs de qualité de connexion indiquant les niveaux de qualité des connexions respectives des autres appareils à la réunion virtuelle, qui est le, ou l'un des paramètres liés au système ; et
la sélection, au moins provisoirement, parmi les autres appareils, d'un appareil ayant un indicateur de qualité de connexion qui dépasse un seuil de qualité prédéterminé.

10. Procédé selon la revendication 8 ou la revendication 9 dans lequel ladite sélection comprend :
la détermination d'indicateurs de bande passante respectifs des autres appareils, les indicateurs de bande passante indiquant la bande passante des connexions respectives des autres appareils à la réunion virtuelle, qui est le, ou l'un des paramètres liés au système ; et
la sélection, au moins provisoirement, parmi les autres appareils d'un appareil ayant un indicateur de bande passante qui dépasse un seuil de bande passante prédéterminé.

11. Procédé selon la revendication 8 dans lequel ladite sélection comprend :
la détermination d'heures de connexion respectives de participants respectifs qui se sont connectés en utilisant les autres appareils, les heures de connexion respectives indiquant le moment où les participants se sont connectés à la réunion virtuelle, qui est le, ou l'un des paramètres liés à la réunion ; et
la sélection, au moins provisoirement, parmi les autres appareils, d'un appareil utilisé par un participant dont les heures de connexion se situent dans un intervalle prédéterminé contenant une heure de début de la réunion virtuelle.

12. Procédé selon l'une quelconque des revendications 8 à 11, dans lequel ladite sélection, au moins provisoirement, des un ou plusieurs autres appareils comprend :
la détermination d'indicateurs de nombre de participants respectifs des autres appareils, les indicateurs de nombre de participants indiquant les nombres respectifs des participants à la réunion virtuelle associés aux autres appareils, qui est le, ou l'un des paramètres liés à la réunion ; et
la sélection, au moins provisoirement, parmi les autres appareils, d'un appareil ayant un indicateur de nombre de participants qui est inférieur à un seuil de nombre de participants prédéterminé.

13. Procédé selon l'une quelconque des revendications 8 à 12, dans lequel ladite sélection, au moins provisoirement, des un ou plusieurs autres appareils comprend la sélection, au moins provisoirement, d'un des autres appareils dont le flux de données de liaison montante ne comprend sensiblement aucune activité vocale, qui est le, ou l'un des paramètres liés à la réunion.

14. Procédé selon l'une quelconque des revendications 8 à 13, dans lequel ladite sélection, au moins provisoirement, des un ou plusieurs autres appareils comprend la sélection, au moins provisoirement, d'un des autres appareils qui s'est connecté à la réunion virtuelle pendant au moins une partie de la période d'absence, qui est le, ou l'un des paramètres liés à la réunion.

15. Support de stockage non transitoire lisible par ordinateur sur lequel est stocké un programme informatique qui, lorsqu'il est exécuté par un système de commande d'un appareil, configure l'appareil pour exécuter le procédé selon l'une quelconque des revendications 8 à 14.
